# EUROPEAN PATENT APPLICATION

(11) **EP 4 835 007 A1**
(43) Date of publication of application: **04.11.2026**
(21) Application number: 24915497.2
(22) Date of filing: 26.12.2024
(51) Int. Cl.: C08L 101/00, C08J 3/22, C08K 5/00, C08L 67/00, C08L 101/16

(54) **PROCESSING AID, MASTER BATCH, THERMOPLASTIC RESIN COMPOSITION, MOLDED BODY, AND PRODUCTION METHODS THEREFOR**

(30) Priority: 05.01.2024 JP 2024000841
(71) Applicant: DAIKIN INDUSTRIES, LTD., Osaka-shi, Osaka 530-0001 (JP)
(72) Inventor: SAKAMI, Kazuki, Osaka-Shi, Osaka 530-0001 (JP); YAMATO, Takafumi, Osaka-Shi, Osaka 530-0001 (JP); MASUI, Toshiaki, Osaka-Shi, Osaka 530-0001 (JP); TAMAI, Rina, Osaka-Shi, Osaka 530-0001 (JP); SUZUKI, Yuuki, Osaka-Shi, Osaka 530-0001 (JP)
(74) Representative: Hoffmann Eitle
(86) International application number: PCT/JP2024/046219
(87) International publication number: WO 2025/146808

(57) **Abstract**

The disclosure aims to provide a processing aid and a masterbatch capable of improving the processibility of thermoplastic resins, a thermoplastic resin composition and a molded article containing these, and production methods thereof. Provided is a processing aid containing: a degradation inhibitor; and a polyester resin.

## Description

### TECHNICAL FIELD

The disclosure relates to processing aids, masterbatches, thermoplastic resin compositions, and molded articles, and production methods thereof.

### BACKGROUND ART

In processing of melt-fabricable thermoplastic resins, rapid extrusion is required to achieve improved productivity and low cost. Still, melt-fabricable thermoplastic resin compositions inevitably have a critical shear rate and extrusion at a rate higher than this critical shear rate causes a rough surface called melt fracture, resulting in a failure in providing a good molded article.

Techniques for improving the processibility of thermoplastic resins have been proposed. For example, Patent Literature 1 proposes a technique involving use of ethylene-vinyl alcohol and Patent Literature 2 proposes a technique involving use of a surfactant and polyethylene glycol. However, the effects thereof are insufficient.

### CITATION LIST

### - Patent Literature

Patent Literature 1: JP H01-215840 A
Patent Literature 2: US 2023/0031000 A1

### SUMMARY OF INVENTION

### - Technical Problem

The disclosure aims to provide a processing aid and a masterbatch capable of improving the processibility of thermoplastic resins, a thermoplastic resin composition and a molded article containing these, and production methods thereof.

### - Solution to Problem

The disclosure (1) relates to a processing aid containing: a degradation inhibitor; and a polyester resin.

The disclosure (2) relates to the processing aid according to the disclosure (1), wherein the processing aid is substantially free from fluorine.

The disclosure (3) relates to the processing aid according to the disclosure (1) or (2), wherein the degradation inhibitor contains at least one skeleton selected from the group consisting of a phenol skeleton and a phosphate skeleton.

The disclosure (4) relates to the processing aid according to any one of the disclosures (1) to (3), wherein the degradation inhibitor includes at least one selected from the group consisting of pentaerythritol tetrakis[3-(3,5-di-tert-butyl-4-hydroxyphenyl)propionate] and tris(2,4-di-tert-butylphenyl) phosphite.

The disclosure (5) relates to the processing aid according to any one of the disclosures (1) to (4), wherein the polyester resin has a melting point of 190°C or lower.

The disclosure (6) relates to the processing aid according to any one of the disclosures (1) to (5), wherein the polyester resin includes a biodegradable resin.

The disclosure (7) relates to the processing aid according to any one of the disclosures (1) to (6), wherein the polyester resin includes polylactic acid.

The disclosure (8) relates to the processing aid according to any one of the disclosures (1) to (7), further containing an ethylene-vinyl alcohol copolymer.

The disclosure (9) relates to a masterbatch containing the processing aid according to any one of the disclosures (1) to (8) and a thermoplastic resin (A).

The disclosure (10) relates to the masterbatch according to the disclosure (9), wherein the thermoplastic resin (A) includes a polyolefin resin.

The disclosure (11) relates to the masterbatch according to the disclosure (9) or (10), wherein the thermoplastic resin (A) includes at least one selected from the group consisting of metallocene-catalyzed linear low-density polyethylene and Ziegler-Natta-catalyzed linear low-density polyethylene.

The disclosure (12) relates to the masterbatch according to any one of the disclosures (9) to (11), wherein a mass ratio of the thermoplastic resin (A) to the processing aid (thermoplastic resin (A):processing aid) is 92:8 to 70:30.

The disclosure (13) relates to a thermoplastic resin composition containing: at least one of the processing aid according to any one of the disclosures (1) to (8) or the masterbatch according to any one of the disclosures (9) to (12); and a thermoplastic resin (B).

The disclosure (14) relates to the thermoplastic resin composition according to the disclosure (13), wherein the thermoplastic resin (B) includes a polyolefin resin.

The disclosure (15) relates to the thermoplastic resin composition according to the disclosure (13) or (14), wherein the thermoplastic resin (B) includes metallocene-catalyzed linear low-density polyethylene.

The disclosure (16) relates to the thermoplastic resin composition according to any one of the disclosures (13) to (15), wherein the processing aid is contained in an amount of 0.1 to 1% by mass.

The disclosure (17) relates to a molded article containing the thermoplastic resin composition according to any one of the disclosures (13) to (16).

The disclosure (18) relates to the molded article according to the disclosure (17), wherein the molded article is in a form of a tube, a film, or a sheet.

The disclosure (19) relates to the molded article according to the disclosure (17) or (18), wherein the molded article has a thickness unevenness of 15% or lower, the thickness unevenness being calculated by the following equation: 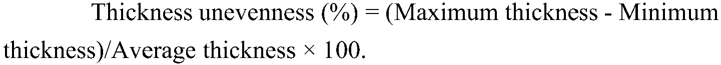 Thickness unevenness (%) = (Maximum thickness - Minimum thickness)/Average thickness × 100.

The disclosure (20) relates to a method for producing the processing aid according to any one of the disclosures (1) to (8), including a mixing step and an ejecting step.

The disclosure (21) relates to a method for producing the masterbatch according to any one of the disclosures (9) to (12), including a mixing step and an ejecting step.

The disclosure (22) relates to a method for producing the thermoplastic resin composition according to any one of the disclosures (13) to (16), including a mixing step and an ejecting step.

The disclosure (23) relates to a method for producing the molded article according to any one of the disclosures (17) to (19), including a molding step.

### - Advantageous Effects of Invention

The disclosure can improve the processibility of thermoplastic resins.

### DESCRIPTION OF EMBODIMENTS

The disclosure will be specifically described hereinbelow.

### <Processing aid>

The thermoplastic resin composition of the disclosure contains a degradation inhibitor and a polyester resin.

The processing aid of the disclosure can provide good processibility. In particular, thickness unevenness of films upon extrusion molding can be improved.

The degradation inhibitor suitably used may be a compound containing at least one skeleton selected from the group consisting of a phenol skeleton and a phosphate skeleton.

In the case where the degradation inhibitor has a phenol skeleton, the number thereof is preferably, but not limited to, 1 or more, more preferably 2 or more, still more preferably 3 or more, particularly preferably 4 or more, while preferably 100 or less, more preferably 10 or less, still more preferably 6 or less.

Specific examples of the degradation inhibitor having a phenol skeleton include compounds having one phenol skeleton (monocyclic phenol compounds) such as 2,6-di-t-butyl-p-cresol, 2,6-di-t-butyl-4-ethylphenol, 2,6-dicyclohexyl-4-methylphenol, 2,6-diisopropyl-4-ethylphenol, 2,6-di-t-amyl-4-methylphenol, 2,6-di-t-octyl-4-n-propylphenol, 2,6-dicyclohexyl-4-n-octylphenol, 2-isopropyl-4-methyl-6-t-butylphenol, 2-t-butyl-4-ethyl-6-t-octylphenol, 2-isobutyl-4-ethyl-6-t-hexylphenol, 2-cyclohexyl-4-n-butyl-6-isopropylphenol, a styrenated cresol mixture, DL-α-tocopherol, stearyl β-(3,5-di-t-butyl-4-hydroxyphenyl)propionate, and 2,6-di-t-butyl-4-(4,6-bis(octylthio)-1,3,5-triazin-2-ylamino)phenol; compounds having two phenol skeletons (bicyclic phenol compounds) such as 2,2'-methylenebis(4-methyl-6-t-butylphenol), 4,4'-butylidenebis(3-methyl-6-t-butylphenol), 4,4'-thiobis(3-methyl-6-t-butylphenol), 2,2'-thiobis(4-methyl-6-t-butylphenol), 4,4'-methylenebis(2,6-di-t-butylphenol), 2,2'-methylenebis[6-(1-methylcyclohexyl)-p-cresol], 2,2'-ethylidenebis(4,6-di-t-butylphenol), 2,2'-butylidenebis(2-t-butyl-4-methylphenol), 3,6-dioxaoctamethylenebis[3-(3-t-butyl-4-hydroxy-5-methylphenyl)propionate], triethylene glycol bis[3-(3-t-butyl-5-methyl-4-hydroxyphenyl)propionate], 1,6-hexanediol bis[3-(3,5-di-t-butyl-4-hydroxyphenyl)propionate], and 2,2'-thiodiethylenebis[3-(3,5-di-t-butyl-4-hydroxyphenyl)propionate]; compounds having three phenol skeletons (tricyclic phenol compounds) such as 1,1,3-tris(2-methyl-4-hydroxy-5-t-butylphenyl)butane, 1,3,5-tris(2,6-dimethyl-3-hydroxy-4-t-butylbenzyl)isocyanurate, 1,3,5-tris[(3,5-di-t-butyl-4-hydroxyphenyl)propionyloxyethyl]isocyanurate, tris(4-t-butyl-2,6-dimethyl-3-hydroxybenzyl)isocyanurate, 1,3,5-trimethyl-2,4,6-tris(3,5-di-t-butyl-4-hydroxybenzyl)benzene; and compounds having four phenol skeletons (tetracyclic phenol compounds) such as tetrakis[methylene-3-(3,5-di-t-butyl-4-hydroxyphenyl)propionate]methane and pentaerythritoltetrakis[3-(3,5-di-tert-butyl-4-hydroxyphenyl)propionate]. Preferred among these are tetracyclic phenol compounds, more preferred are tetrakis[methylene-3-(3,5-di-t-butyl-4-hydroxyphenyl)propionate]methane and pentaerythritoltetrakis[3-(3,5-di-tert-butyl-4-hydroxyphenyl)propionate], and still more preferred is pentaerythritoltetrakis[3-(3,5-di-tert-butyl-4-hydroxyphenyl)propionate].

The phosphate skeleton refers to one having a structure in which one to four O (oxygen) atoms are bonded to one P (phosphorus) atom. Preferred is one in which three O (oxygen) atoms are bonded to one P (phosphorus) atom.

In the case where the degradation inhibitor has a phosphate skeleton, the number thereof is preferably, but not limited to, 1 or more, more preferably 2 or more, still more preferably 3 or more, while preferably 100 or less, more preferably 10 or less, still more preferably 6 or less.

Specific examples of the degradation inhibitor having a phosphate skeleton include: 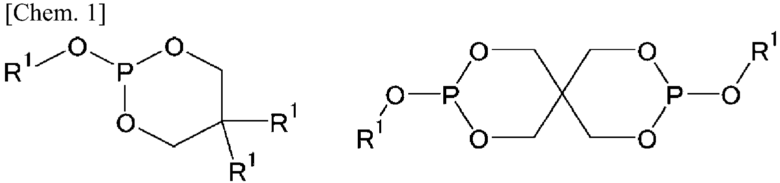 (wherein R¹ is selected from the group consisting of a C1-C16 linear or branched alkyl group and an aryl group, where R¹s are the same as or different from each other), and a compound represented by the formula P(OR¹)₃ (wherein R¹ is selected from the group consisting of C4-C32 linear or branched alkyl groups). More specific examples thereof include trilauryl phosphite, triisodecyl phosphite, tridecyl phosphite, trihexadecyl phosphite, trioctadecyl phosphite, tribehenyl phosphite, triarachidyl phosphite, triceryl phosphite, trioleyl phosphite, tris(2-ethylhexyl)phosphite, phosphorous acid diphosphoric acid salts and polymer homologs such as monostearyl phosphite (or its tautomer, monostearyl phosphonate) and distearyl phosphite (distearyl phosphonate), partially esterified phosphonic acid compounds, and alkali salts, alkaline-earth salts, aluminum salts, and zinc salts thereof.

Examples of diphosphorous acid include tetraethyl diphosphite and tetrapropyl diphosphite. Examples of triphosphorous acid include triphosphorigenic acid P,P'-bis(2-hydroxyethyl) ester.

Oligophosphites and polyphosphites (oligomer phosphites and polymer phosphites) are disclosed in WO 2011/102861, WO 2014/20519, and WO 2020/123986, for example. Compounds disclosed in these documents may also be used. Examples thereof include the following compounds.

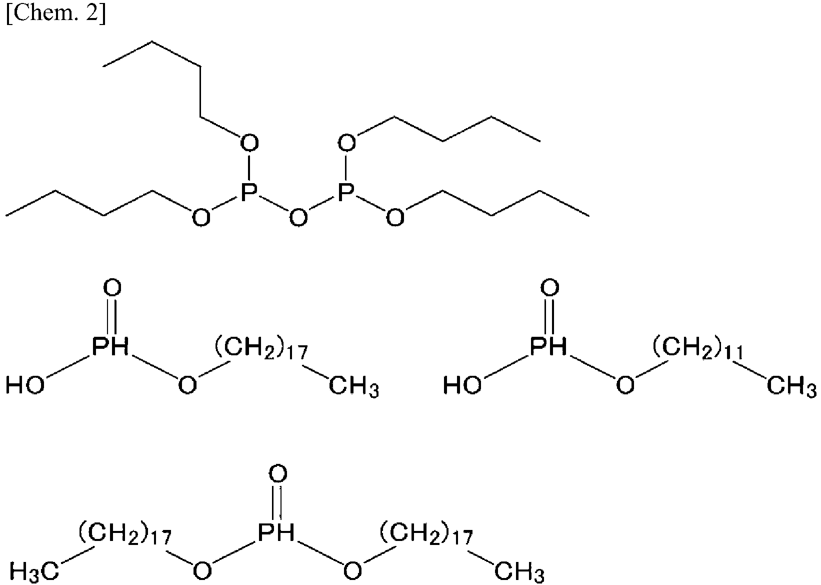

Examples also include phosphoric acid esters, diphosphoric acid esters, metaphosphoric acid esters, and polyphosphoric acid esters derived from any of the aforementioned phosphorous acid esters, such as trilauryl phosphate, triisodecyl phosphate, tridecyl phosphate, trihexadecyl phosphate, trioctadecyl phosphate, tribehenyl phosphate, triarachidyl phosphate, triceryl phosphate, and trioleyl phosphate, the following structures and salts derived therefrom, and any mixture of at least two phosphoric acid esters selected from the group consisting of a monoalkyl phosphoric acid ester, a dialkyl phosphoric acid ester, and a trialkyl phosphoric acid ester.

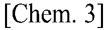

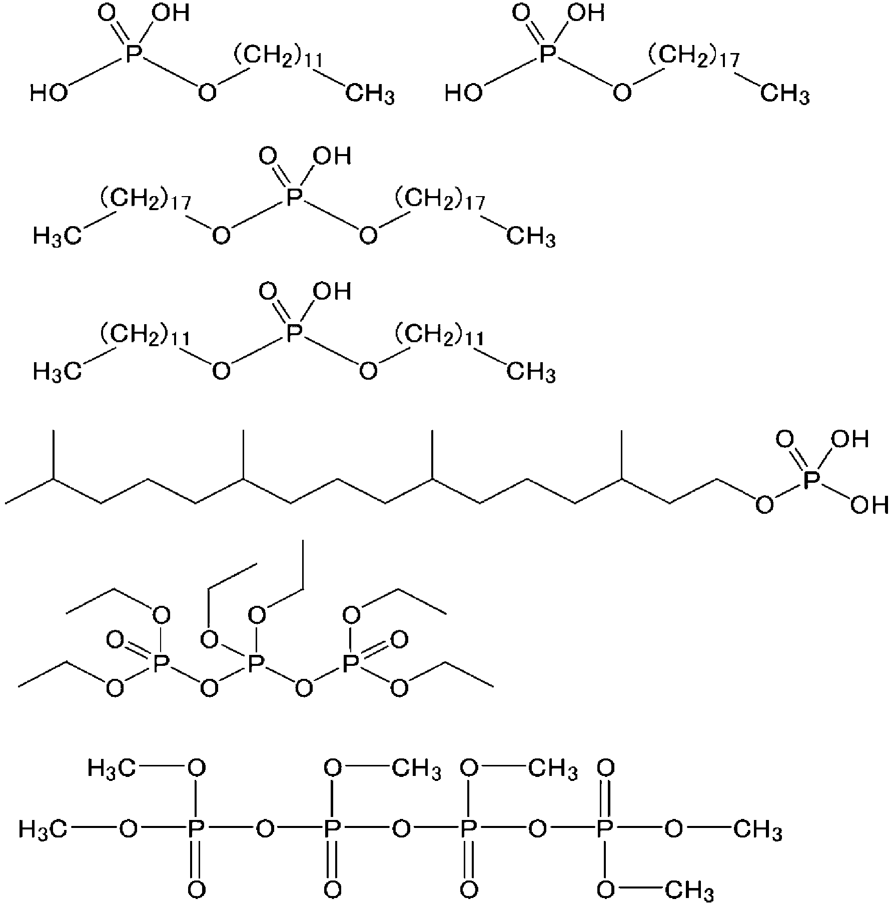

In the case of the aforementioned phosphoric acid ester, diphosphoric acid ester, metaphosphoric acid ester, or polyphosphoric acid ester, i.e., any of the aforementioned phosphorous acid ester derivatives, the phosphorus atoms are present not with an oxidation number of +III as in the case of a phosphorous acid ester, but with an oxidation number of +V.

The degradation inhibitor having a phosphate skeleton is preferably a phosphorous acid salt. Examples of the phosphorous acid salt include the following compounds.

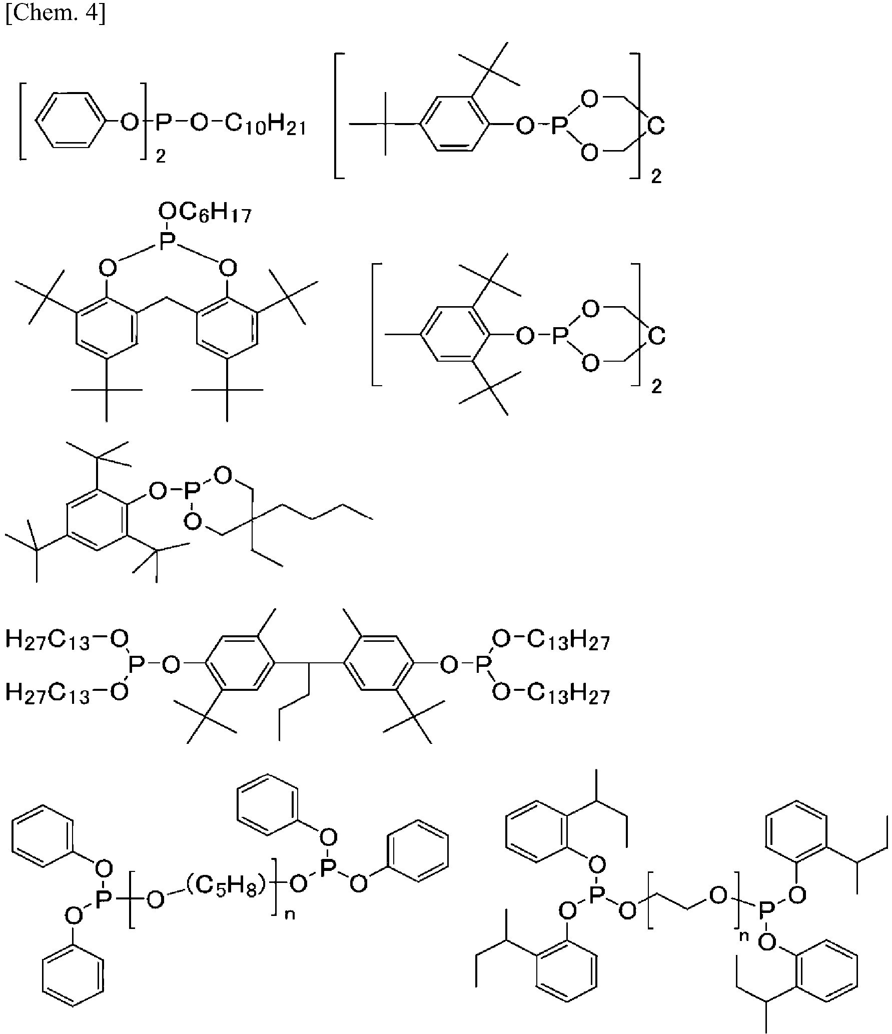

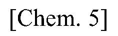

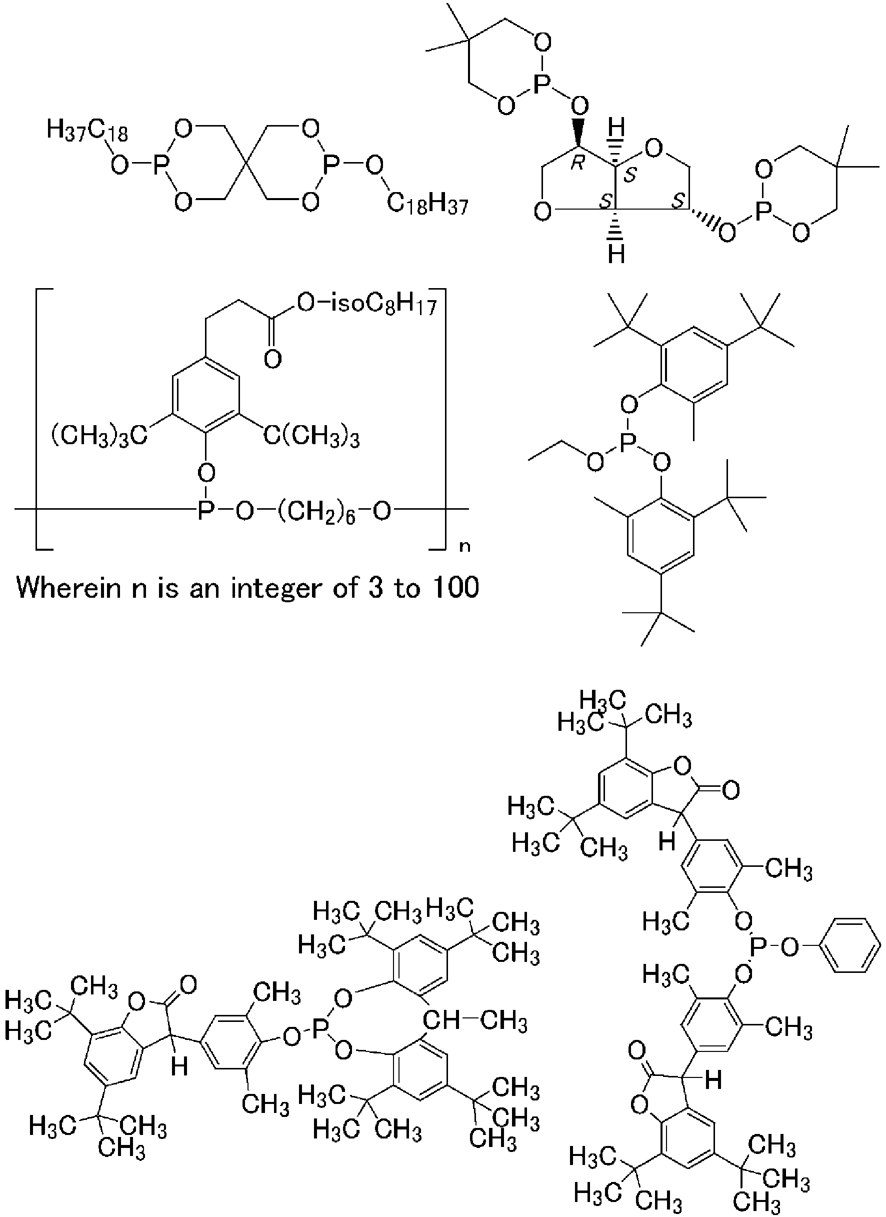

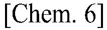

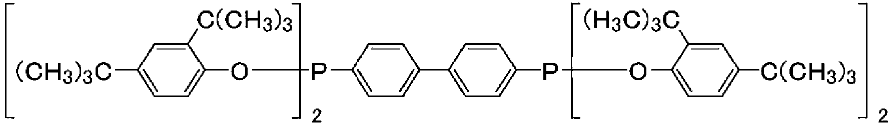

An example of a particularly preferred phosphorous acid salt is tris(2,4-di-tert-butylphenyl)phosphite.

Specific examples of the degradation inhibitor having a phenol skeleton and a phosphate skeleton include phosphorus-containing phenol compounds such as calcium bis(ethyl 3,5-di-t-butyl-4-hydroxybenzylphosphonate) and nickel bis(ethyl 3,5-d-t-butyl-4-hydroxybenzylphosphonate).

The degradation inhibitor may have either a phenol skeleton or a phosphate skeleton, or may have both a phenol skeleton and a phosphate skeleton, and preferably has either a phenol skeleton or a phosphate skeleton.

The degradation inhibitor used is preferably a combination of one having a phenol skeleton alone (phenol degradation inhibitor) and one having a phosphate skeleton alone (phosphate degradation inhibitor). This can lead to good pressure stability during extrusion.

In the case where the degradation inhibitor used is a combination of a phenol degradation inhibitor and a phosphate degradation inhibitor, a mass ratio thereof (phenol degradation inhibitor:phosphate degradation inhibitor) is preferably 20:80 to 80:20. The mass ratio is more preferably 30:70 to 70:30, still more preferably 40:60 to 60:40, particularly preferably 50:50.

The processing aid of the disclosure contains the degradation inhibitor in an amount of preferably 10% by mass or more, more preferably 20% by mass or more, still more preferably 30% by mass or more, while preferably 80% by mass or less, more preferably 70% by mass or less, still more preferably 60% by mass or less.

Examples of the polyester resin include: aliphatic polyesters such as polylactic acid (PLA), polybutylene succinate (PBS), polybutylene succinate adipate (PBSA), polyhydroxy butyrate, polycaprolactone, polybutylene succinate/adipate, polyethylene succinate, polymalic acid, polyglycolic acid, polydioxanone, and poly(2-oxetanone); and aromatic aliphatic polyesters such as polybutylene succinate/terephthalate, polybutylene adipate/terephthalate (PBAT), and polytetramethylene adipate/terephthalate. Each of these may be used alone or two or more of these may be used in combination. In order to achieve a better effect of improving the processibility, preferred are biodegradable aliphatic polyesters, more preferred is at least one selected from the group consisting of PLA, PBS, and PBSA, still more preferred is at least one selected from the group consisting of PLA and PBS, and further preferred is PLA.

The biodegradable resin can be suitably used as the polyester resin.

The melting point of the polyester resin is preferably 65°C or higher, more preferably 70°C or higher, still more preferably 75°C or higher, further preferably 80°C or higher, while preferably 190°C or lower, more preferably 185°C or lower, still more preferably 180°C or lower. The polyester resin having a melting point within this range can lead to a better effect of improving the processibility.

The melting point herein is the temperature corresponding to the maximum value on a heat-of-fusion curve at a temperature-increasing rate of 10°C/min using a differential scanning calorimeter (DSC).

The polyester resin has a melt flow rate (MFR) of preferably 0.001 g/10 min or higher, more preferably 0.01 g/10 min or higher, still more preferably 0.05 g/10 min or higher, further preferably 0.1 g/10 min or higher, particularly preferably 0.5 g/10 min or higher, while preferably 500 g/10 min or lower, more preferably 300 g/10 min or lower, still more preferably 150 g/10 min or lower, further preferably 40 g/10 min or lower, further preferably 20 g/10 min or lower, particularly preferably 10 g/10 min or lower. The polyester resin having a MFR within this range can lead to a better effect of improving the processibility.

The MFR herein is determined under conditions of 190°C and a 2.16 kgf load in conformity with ASTM D1238.

From the viewpoint of improved processibility, the weight average molecular weight of the polyester resin is preferably 80000 or more, more preferably 100000 or more. From the same viewpoint, the weight average molecular weight of the polyester resin is preferably 400000 or less, more preferably 350000 or less. The weight average molecular weight of the resin (A) can be determined by gel permeation chromatography (GPC). The analysis is performed using chloroform as a solvent with a high-temperature SEC column (GMHHR-H series) available from Tosoh Corporation at a flow rate of 1.0 mL/min and a column temperature of 40°C. A differential refractive index detector (RI) is used as a detector, with polystyrene of known molecular weight as a reference.

The amount of the polyester resin in the processing aid of the disclosure is preferably 20% by mass or more, more preferably 30% by mass or more, still more preferably 40% by mass or more, while preferably 90% by mass or less, more preferably 80% by mass or less, still more preferably 70% by mass or less.

The total amount of the degradation inhibitor and the polyester resin in the processing aid of the disclosure is preferably 60% by mass or more, more preferably 70% by mass or more, still more preferably 80% by mass or more. The upper limit may be, but is not limited to, 100% by mass, preferably 99% by mass or less, more preferably 98% by mass or less.

The processing aid of the disclosure preferably contains an ethylene-vinyl alcohol copolymer (EVOH) together with the degradation inhibitor and the polyester resin. This leads to better processibility.

The ethylene-vinyl alcohol copolymer has an ethylene content of preferably 10 mol% or more, more preferably 20 mol% or more, still more preferably 30 mol% or more, while preferably 60 mol% or less, more preferably 50 mol% or less, still more preferably 40 mol% or less. The ethylene-vinyl alcohol copolymer having an ethylene content within this range can lead to a better effect of improving the processibility.

The ethylene content herein is determined by nuclear magnetic resonance (NMR) analysis.

The ethylene-vinyl alcohol copolymer is preferably one obtained by saponifying an ethylene-vinyl ester copolymer, and is particularly preferably one obtained by saponifying an ethylene-vinyl acetate copolymer.

The ethylene-vinyl alcohol copolymer has a degree of saponification of preferably 80 to 100 mol%.

Copolymerization of ethylene and vinyl acetate may involve use of a different fatty acid vinyl ester (e.g., vinyl propionate or vinyl pivalate). The ethylene-vinyl alcohol copolymer may contain 0.0002 to 0.2 mol% of a vinylsilane compound as a copolymerized component. Examples of the vinylsilane compound include vinyltrimethoxysilane, vinyltriethoxysilane, vinyltri(β-methoxy-ethoxy)silane, and γ-methacryloxypropylmethoxysilane. Preferably used among these are vinyltrimethoxysilane and vinyltriethoxysilane.

Copolymerization of ethylene and vinyl acetate may involve the presence of a small amount of a monomer different from the aforementioned fatty acid vinyl ester or vinylsilane compound, such as any of α-olefins such as propylene, isobutylene, α-octene, and α-dodecene; unsaturated acids such as acrylic acid, methacrylic acid, crotonic acid, maleic acid, and itaconic acid, and anhydrides, salts, and mono- or dialkyl esters thereof; nitriles such as acrylonitrile and methacrylonitrile; amides such as acrylamide and methacrylamide; olefin sulfonic acids such as ethylene sulfonic acid, allyl sulfonic acid, and methallyl sulfonic acid and salts thereof; alkyl vinyl ethers, vinyl ketones, N-vinylpyrrolidone, vinyl chloride, and vinylidene chloride.

The amount of the ethylene-vinyl alcohol copolymer in the processing aid of the disclosure is preferably 3% by mass or more, more preferably 5% by mass or more, still more preferably 6% by mass or more, while preferably 90% by mass or less, more preferably 70% by mass or less, still more preferably 50% by mass or less.

The mass ratio of the polyester resin to the ethylene-vinyl alcohol copolymer (polyester resin:ethyl-vinyl alcohol copolymer) is preferably 99:3 to 10:90. The mass ratio is more preferably 95:5 to 70:30, still more preferably 92:8 to 50:50, particularly preferably 90:10 to 75:25.

The total amount of the degradation inhibitor, the polyester resin, and the ethylene-vinyl alcohol copolymer in the processing aid of the disclosure is preferably 80% by mass or more, more preferably 90% by mass or more, particularly preferably 100% by mass.

The processing aid of the disclosure may further contain a component different from the degradation inhibitor, the polyester resin, and the ethylene-vinyl alcohol copolymer. Examples of the different component include a synergist including at least one selected from the group consisting of a polyol, polycaprolactone, silicone, and a polyamide-polyether block copolymer each of which has a melting point of 80°C or lower.

The melting point of the polyol is at least 80°C or lower, preferably 75°C or lower, more preferably 70°C or lower, still more preferably 68°C or lower, while preferably 10°C or higher, more preferably 20°C or higher, still more preferably 25°C or higher. The polyol having a melting point within this range can lead to a better effect of improving the processibility.

The polyol can be represented by A[(OR¹¹)ₓOR¹²]_{y}, wherein A is commonly alkylene having one or more ether bonds; y is 2 or 3, (OR¹¹)ₓ is a poly(oxyalkylene) chain having multiple (x) oxyalkylene groups OR¹¹; R¹¹s are each independently C2-C5 alkylene or, in some embodiments, C2-C3 alkylene; R¹² is hydrogen, alkyl, aryl, arylalkenyl, alkylarylenyl, -C(O)-alkyl, -C(O)-aryl, -C(O)-arylalkenyl, or -C(O)-alkylarylenyl, where -C(O)- bonds to O of OR¹²; and x is 10 to 230000.

The polyol may be, for example, a homopolymer such as poly(oxypropylene) in which R¹¹ is -CH₂CH₂₋ or poly(oxyethylene) in which R¹¹ is -C₃H₆-.

The polyol may be a chain of randomly distributed oxyalkylene groups (e.g., - OC₂H₄- and -OC₃H₆- units which are copolymers) or a chain including alternating blocks of repeated oxyalkylene groups (e.g., a polymer including a (-OC₂H₄-)ₐ₁ block and a (-OC₃H₆-)_{b1} block, where a1 + b1 is 10 to 230000).

In some embodiments, A in the polyol is ethylene, -CH₂-CH(-)-CH₂- (derived from glycerol), CH₃CH₂C(CH₂-)₃ (derived from 1,1,1-trimethylolpropane), poly(oxypropylene), -CH₂CH₂-O-CH₂CH₂-, or -CH₂CH₂-O-CH₂CH₂-O-CH₂CH₂-; and R¹² is hydrogen, methyl, butyl, phenyl, benzyl, acetyl, benzoyl, or stearyl.

The polyol may be polyester prepared from a dicarboxylic acid and a poly(oxyalkylene) polymer represented by A[(OR¹¹)ₓ₂OR¹²]_{y2}, wherein A, R¹¹, and x2 are as defined above; R¹² is hydrogen; and y2 is 2.

One of the polyols may be used alone or two or more thereof may be used in combination. To achieve an excellent effect of improving the processibility, polyethylene glycol or polyethylene oxide is preferred, and polyethylene glycol is particularly preferred.

The polyethylene glycol has a number average molecular weight (Mn) of preferably 1000 or higher, more preferably 3000 or higher, still more preferably 5000 or higher, while preferably 50000 or lower, more preferably 45000 or lower, still more preferably 40000 or lower. The polyethylene glycol having a number average molecular weight within this range can lead to a better effect of improving the processibility.

The number average molecular weight herein is determined by calculation from the hydroxyl value determined in conformity with JIS K0070.

The polyethylene oxide has a viscosity average molecular weight (Mv) of preferably 100000 or higher, more preferably 120000 or higher, still more preferably 140000 or higher, while preferably 10000000 or lower, more preferably 1600000 or lower, still more preferably 500000 or lower. The polyethylene oxide having a viscosity average molecular weight within this range can lead to a better effect of improving the processibility.

The viscosity average molecular weight herein is calculated as follows.

An Ostwald viscometer is used to determine at 35°C the specific viscosities ηsp of aqueous solutions containing a polymer at various concentrations c (g/dl) in pure water; each specific viscosity is divided by the corresponding polymer concentration to provide the reduced viscosity; based on the relationship between the resulting reduced viscosity (ηsp/c) and the polymer concentration c, with the polymer concentration c being extrapolated to 0, the [η] value is calculated. The [η] value is substituted into the following formula, whereby the viscosity average molecular weight M is calculated. Formula: $\left[η\right] = 6.4 \times {10}^{- 5} {M}^{0.82}$

The polycaprolactone may be a homopolymer of ε-caprolactone or may be a modified polycaprolactone. Examples of the modified polycaprolactone include those modified with, for example, 1,4-butanediol combined during ring-opening polymerization of ε-caprolactone and those modified with, for example, an ether or ester group at an end of a polymer.

The polycaprolactone has a weight average molecular weight (Mw) of preferably 2000 or higher, more preferably 10000 or higher, still more preferably 25000 or higher, while preferably 100000 or lower, more preferably 95000 or lower, still more preferably 90000 or lower. The polycaprolactone having a weight average molecular weight within this range can lead to a better effect of improving the processibility.

The weight average molecular weight herein is determined in polystyrene equivalent by gel permeation chromatography (GPC).

The polycaprolactone has a melting point of preferably 80°C or lower, more preferably 75°C or lower, still more preferably 70°C or lower, further preferably 68°C or lower, while preferably 10°C or higher, more preferably 20°C or higher, still more preferably 45°C or higher. The polycaprolactone having a melting point within this range can lead to a better effect of improving the processibility.

The silicone may be basically any organic silicon compound known to those skilled in the art with the term silicone polymer. An appropriate definition of the silicone is found in Winnacker/Kuchler: "Chemische Technik" [Chemical Technology], R. Dittmeyer, W. Keim, G. Kreysa, A. Oberholz (editor), Vol. 5: "Organische Zwischenverbindungen, Polymere" [Organic Intermediates, Polymers], Chapter: "Silicones", Wiley-VCH, Weinheim, 2005.

The silicone may be a substituted or unsubstituted linear oligo- or polydiorganosiloxane, a branched silicone polymer, silicone resin, or a crosslinked silicone polymer. A mixture of various silicone polymers may also be used, of course. As described above, a silicone-containing copolymer may be used, such as a polyether functional silicone, a silicone containing a urea or urethane unit, or a silicone block copolymer with an organic polymer. To achieve better additivity, particularly preferred is to use a high molecular weight polydiorganosiloxane that can contain a non-silicone component, such as filler, e.g., fine silicic acid particulate, chalk, talc, or a sheet-shaped silicic acid salt.

Preferably, the silicone polymer corresponds to the formula A [R¹³₃SiO_{1/2}]ₐ₂[SiR¹³₂O_{2/2}]_{b2}[R¹³SiO_{3/2}]_{c2}[SiO_{4/2}]_{d2}, wherein R¹³ is hydrogen, -OH, or a C1-C18 substituted or unsubstituted hydrocarbon residue; and a2, b2, c2, and d2 each mean 0 or an integer, with a2 + b2 + c2 + d2 being an integer of 5 to 15000.

Examples of the C1-C18 hydrocarbon residue R¹³ include alkyl residues, such as methyl, ethyl, n-propyl, isopropyl, n-butyl, 2-butyl, isobutyl, tert-butyl, n-pentyl, isopentyl, neopentyl, a tert-pentyl residue, hexyl residues, e.g., a n-hexyl residue, heptyl residues, e.g., a n-heptyl residue, octyl residues, e.g., a n-octyl residue and an isooctyl residue, a 2,2,4-trimethylpentyl residue, nonyl residues, e.g., a n-nonyl residue, decyl residues, e.g., a n-decyl residue, cycloalkyl residues, e.g., a cyclopentyl residue, a cyclohexyl residue, a 4-ethylcyclohexyl residue, and a cycloheptyl residue, a norbornyl residue, and a methylcyclohexyl residue. Preferred among the alkyl residues are C1-C6 residues, such as methyl and ethyl residues, particularly a methyl residue.

Examples of R¹³ also include C1-C18 unsaturated hydrocarbon residues such as alkenyl residues, e.g., a vinyl residue, a 2-propen-2-yl residue, an allyl residue, a 3-buten-1-yl residue, a 5-hexen-1-yl residue, and a 10-undecen-1-yl residue, as well as cycloalkenyl residues (a 2-cyclohexenyl residue, a 3-cyclohexenyl residue, a cyclopentadienyl residue, and a 2-(cyclohex-3-en-1-yl)ethyl residue); aryl residues, e.g., a phenyl residue, a biphenylyl residue, and a naphthyl residue; alkaryl residues, e.g., o-, m-, or p-tolyl residue and phenethyl residues (a 2-phenylethyl residue and a 1-phenylethyl residue); as well as aralkyl residues, e.g., a benzyl residue. Preferred C1-C18 unsaturated hydrocarbon residues R¹³ are a vinyl residue and a phenyl residue.

Examples of a substituted hydrocarbon residue as the residue R¹³ include halogenated hydrocarbons such as a chloromethyl residue, a 3-chloropropyl residue, a 3-bromopropyl residue, a 3,3,3-trifluoropropyl residue, and a 5,5,5,4,4,3,3-heptafluoropentyl residue, as well as a chlorophenyl residue, a dichlorophenyl residue, and a trifluorotolyl residue.

The residue R¹³ is preferably coupled with a silicone polymer represented by the formula A via a Si-C bond, and may be coupled with the silicone polymer via an oxygen atom -O-.

R¹³ preferably contains 1 to 6 carbon atoms. Particularly preferred are an ethyl residue, a phenyl residue, a vinyl residue, and a methyl residue.

Preferably, the number represented by a2 + b2 + c2 + d2 means at least 10, more preferably at least 100, particularly preferably at least 1000 and at most 15000, more preferably at most 10000, particularly preferably at most 7000.

Preferably, the number represented by c2 + d2 means < 0.1 × (a2 + b2 + c2 + d2), particularly c2 + d2 < 0.05 × (a2 + b2 + c2 + d2).

Preferably at least 50%, more preferably at least 70%, particularly preferably at least 80% of all residues R¹³ mean a methyl residue.

In principle, every silicone polymer corresponding to the formula A may be used. Still, preferred is a silicone polymer having a dynamic viscosity of higher than 1000 mPa·s, which is measured using a plate-cone system (cone CP50-2) having an opening angle of 2° and a diameter of 50 mm with a rheometer "MCR 302" available from Anton Paar at a measurement temperature of 25.00°C ± 0.05°C and a shear rate of 1 sec-1, preferably in conformity with DIN EN ISO3219:1994 and DIN 53019.

Among these silicones, a silicone polymer having a very high molecular weight may be used, such as UHMW polysiloxane (ultra-high molecular weight; described in K. J. Ryan, et al., Journal of Vinyl & Additive Technology, March 2000, Vol. 6, No. 1, pp. 7-19).

UHMW polysiloxane has a degree of polymerization within a range from > 1000 to about 14000, which corresponds to a number average molecular weight from 74 kg/mol to 1000 kg/mol.

Typical UHMW polysiloxane has a dynamic viscosity from 10 kPa·s to 50 kPa·s, preferably from 15 kPa·s to 30 kPa·s, which is determined using an airborne rotational rheometer preferably in conformity with DIN EN ISO3219:1994 and DIN 53019, where a plate-plate system (diameter 25 mm) having a measurement gap of 0.5 mm is used. The measurement temperature is 25.00°C +/- 0.1°C. The shear rate gradient is 0.1 sec^{-1.} The viscosity described refers to an arithmetic mean of three distinct, independently measured values.

Owing to its inexpensiveness and effectiveness, particularly preferred among the UHMW polysiloxanes is a high molecular weight polydimethylsiloxane having a dynamic viscosity from 1 kPa·s to 50 kPa·s, preferably from 10 to 40 kPa·s, particularly preferably from 15 to 30 kPa·s (preferably determined by the aforementioned method).

Examples of the UHMW polysiloxane include commercially available UHMW polysiloxanes such as MULTIBASE^{®} MB50-001 and MULTIBASE^{®} MB50-002 available from Dupont, GENIOPLAST^{®} PELLET S, GENIOPLAST^{®} PELLET P PlUS, GENIOPLAST^{®} PE50S08, and GENIOPLAST^{®} PP50S12 available from Wacker Asahikasei Silicone Co., Ltd., and mixtures of any of these, with MB50-002 and GENIOPLAST^{®} PELLET S being preferred.

The silicone polymer can be commercially available in the form of pellets or granules or masterbatch for ready-to-use, which may be mixed with thermoplastic granules before additional processing.

The polyamide-polyether block copolymer is a copolymer including a polyamide block and a polyether block in the polymer backbone. In the disclosure, such a block copolymer including a polyamide block and a polyether block can also be referred to as a "polyamide/polyether block copolymer". This may also be abbreviated to "PEBA copolymer" or "PEBA".

In some embodiments of the disclosure, the PEBA copolymer can be represented by the following formula: 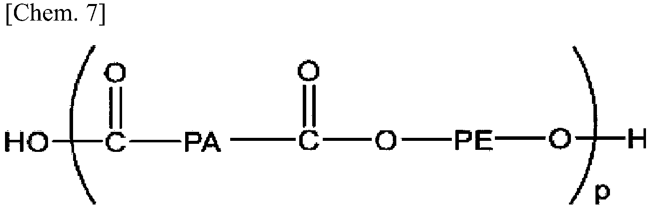 wherein PA represents a polyamide block, PE represents a polyether block, and p represents the length of the PEBA copolymer, which represents the total number of the polyamide and polyether blocks. In some embodiments of the disclosure, the PEBA copolymer can be represented by the following formula: 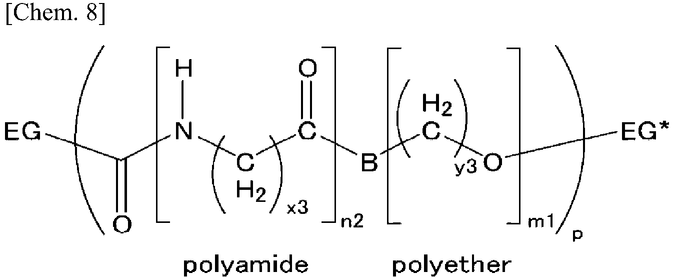 wherein EG represents a first unspecified end group; B represents an unspecified crosslinking group; and EG* represents a second unspecified end group, where EG, B, and EG* are determined by a synthesis method used for producing a PEBA copolymer, wherein n2 represents the length of the polyamide block; x3 represents the length of an amide component in the polyamide block; m1 represents the length of the poly(ether) block; y3 represents the length of an ether component in the poly(ether) block; and p represents the length of the PEBA copolymer, which represents the total number of the polyamide and polyether blocks.

In some embodiments of the disclosure, the PEBA copolymer can be represented by the following formula: 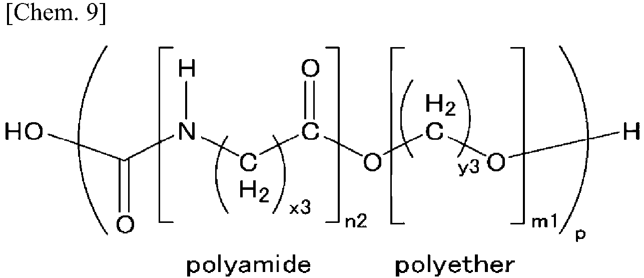 wherein n2 represents the length of the polyamide block; x3 represents the length of an amide component in the polyamide block; m1 represents the length of the poly(ether) block; y3 represents the length of an ether component in the poly(ether) block; and p represents the length of the PEBA copolymer, which represents the total number of the polyamide and polyether blocks.

The polyamide block in the PEBA copolymer is derived from polyamide-12 (PA-12), polyamide-11 (PA-11), polyamide-6 (PA-6), or polyamide-66 (PA-66).

The weight average molecular weight (e.g., Mw and Mn) of the PEBA copolymer can be determined, for example, by gel permeation chromatography using a narrow molecular weight polymer standard based on a known technique in the technical field (i.e., by size-exclusion chromatography).

In an embodiment, the number average molecular weight Mn of the polyamide block in the PEBA copolymer is about 100 to about 15000 g/mol, or about 300 to about 15000 g/mol, or about 600 to about 10000 g/mol, or about 600 to about 5000 g/mol.

The number average molecular weight Mn of the polyether block in the PEBA copolymer is about 100 to about 15000 g/mol, about 100 to about 10000 g/mol, about 100 to about 6000 g/mol, about 100 to about 3000 g/mol, about 200 to about 6000 g/mol, about 200 to about 3000 g/mol, about 250 to about 2000 g/mol, about 750 to about 3500 g/mol, or about 1000 to about 3000 g/mol.

The PEBA copolymer has a number average molecular weight Mn of 10000 to 500000 g/mol, including any subrange within these ranges and any number within these ranges. In an embodiment of the disclosure, for example, the number average molecular weight Mn of the PEBA copolymer is 10000 to 400000 g/mol, or 10000 to 300000 g/mol, 10000 to 250000 g/mol, or 15000 to 300000 g/mol, or 20000 to 300000 g/mol, or 15000 to 200000 g/mol, or 20000 to 200000 g/mol, or 30000 to 250000 g/mol, or about 25000 to about 75000 g/mol, or about 50000 to about 75000 g/mol, or about 100000 to about 150000 g/mol.

The number average molecular weight Mn of the PEBA copolymer is at least 10000 g/mol, at least 20000 g/mol, at least 25000 g/mol, exceeding 25000 g/mol, at least 30000 g/mol, exceeding 30000 g/mol, at least 35000 g/mol, exceeding 35000 g/mol, at least 50000 g/mol, or exceeding 50000 g/mol.

In an embodiment, the PEBA copolymer has a weight average molecular weight Mw of 25000 to 500000 g/mol, including any subrange within these ranges and any number within these ranges. In an embodiment of the disclosure, for example, the weight average molecular weight Mw of the PEBA copolymer is about 100000 to about 250000 g/mol, or about 100000 to about 150000 g/mol, or about 125000 to about 150000 g/mol.

The polyamide and polyether blocks in the PEBA copolymer may be randomly distributed.

The PEBA copolymer contains a polyamide block and a polyether block and the polyamide block may occupy at least 50% by mass of the copolymer. The PEBA copolymer contains a polyamide block and a polyether block and the polyether block may occupy at least 50% by mass of the copolymer. The PEBA copolymer contains a polyamide block and a polyether block and the ratio by mole of the polyamide block to the polyether block may fall within a range of 1:3 to 3:1, or 1:2 to 2:1, or 3:2 to 1:3, or 2:3 to 3:1, or about 1:1.

The PEBA copolymer containing a polyamide block and a polyether block can be prepared by reacting precursors of the polyamide and polyether blocks. For example, a lactam, a polyether diol, and a chain-limiting dioic acid may be reacted together in the presence of a small amount of water, thereby producing a length-variable PEBA copolymer containing a polyamide block and a polyether block statistically randomly distributed in the block copolymer chain.

The polyether block may be derived from poly(oxyethylene), poly(oxypropylene), or poly(tetramethylene ether)glycol, each of which in the natural state may be co-condensed with a polyamide block having a carboxylic acid chain end. A chain-limiting agent may be present during the polycondensation reaction to provide a PEBA copolymer containing a polyamide block and a polyether block randomly distributed in the block copolymer.

The polyether block is derived from poly(oxyethylene), poly(oxypropylene), or poly(tetramethylene ether)glycol, each of which are first aminated into polyether diamine and then co-condensed with a polyamide block having a carboxylic acid chain end. A chain-limiting agent may be present during the polycondensation reaction to provide a PEBA copolymer containing a polyamide block and a polyether block randomly distributed in the block copolymer.

The polyether block can be derived from poly(oxyethylene), which is also known as polyethylene glycol (PEG).

The polyether block can be derived from poly(oxypropylene), which is also known as polypropylene glycol (PPG).

The polyether block can be derived from poly(tetramethylene ether)glycol (PTMG), which is also known as polytetramethylene oxide (PTMEO) or polytetrahydrofuran (PTHF).

The PEBA copolymer contains i) a polyamide block selected from polyamide-12 (PA-12), polyamide-11 (PA-11), polyamide-6 (PA-6), or a mixture of any of these and ii) a polyether block selected from polyethylene glycol (PEG), polypropylene glycol (PPG), polytetrahydrofuran (PTHF), or a mixture of any of these.

The PEBA copolymer contains i) a polyamide block selected from polyamide-12 (PA-12), polyamide-11 (PA-11), polyamide-6 (PA-6), or a mixture of any of these and ii) a polyether block which is polyethylene glycol (PEG). In an embodiment of the disclosure, the PEBA copolymer contains i) a polyamide block which is polyamide-12 (PA-12) and ii) a polyether block which is polyethylene glycol (PEG).

The PEBA copolymer contains 10 to 20 polyamide blocks and 10 to 20 polyether blocks.

The PEBA copolymer contains a single species of the polyamide block and a single species of the polyether block.

The PEBA copolymer contains i) a polyamide block which is polyamide-12 (PA-12) and ii) a polyether block which is polyethylene glycol (PEG), wherein the polyamide-12 block occupies about 30% by mass to 70% by mass of the copolymer and the polyethylene glycol block occupies about 70% by mass to 30% by mass of the copolymer.

The PEBA copolymer contains i) a polyamide block which is polyamide-12 (PA-12) and ii) a polyether block which is polyethylene glycol (PEG), wherein the polyamide-12 block occupies about 40% by mass to 60% by mass of the copolymer and the polyethylene glycol block occupies about 60% by mass to 40% by mass of the copolymer.

The PEBA copolymer contains i) a polyamide block which is polyamide-12 (PA-12) and ii) a polyether block which is polyethylene glycol (PEG), wherein the polyamide-12 block represents about 45% by mass of the copolymer and the polyethylene glycol block represents about 55% by mass of the copolymer.

The PEBA copolymer contains i) 10 to 20 polyamide blocks each of which is polyamide-12 (PA-12) and ii) 10 to 20 polyether blocks each of which is polyethylene glycol (PEG).

The PEBA copolymer contains i) a polyamide block which is polyamide-12 (PA-12) and ii) a polyether block which is polyethylene glycol (PEG), and has a number average molecular weight Mn of about 25000 to about 75000 g/mol.

The PEBA copolymer contains i) a polyamide block which is polyamide-12 (PA-12) and ii) a polyether block which is polyethylene glycol (PEG), and has a number average molecular weight Mn of about 50000 to about 75000 g/mol. The PEBA copolymer contains i) a polyamide block which is polyamide-12 (PA-12) and ii) a polyether block which is polyethylene glycol (PEG), and has a number average molecular weight Mn of about 66100 g/mol.

The PEBA copolymer contains i) a polyamide block which is polyamide-12 (PA-12) and ii) a polyether block which is polyethylene glycol (PEG), and has a weight average molecular weight Mw of about 100000 to about 150000 g/mol.

The PEBA copolymer contains i) a polyamide block which is polyamide-12 (PA-12) and ii) a polyether block which is polyethylene glycol (PEG), and has a weight average molecular weight Mw of about 125000 to about 150000 g/mol.

The PEBA copolymer contains i) a polyamide block which is polyamide-12 (PA-12) and ii) a polyether block which is polyethylene glycol (PEG), and has a weight average molecular weight Mw of about 134000 g/mol.

In an embodiment of the disclosure, the PEBA copolymer contains i) a polyamide block which is polyamide-6 (PA-6) and ii) a polyether block which is polyethylene glycol (PEG).

The PEBA copolymer contains i) a polyamide block which is polyamide-6 (PA-6) and ii) a polyether block which is polyethylene glycol (PEG), wherein the polyamide-6 block represents about 30% by mass to 60% by mass of the copolymer and the polyethylene glycol block represents about 70% by mass to 40% by mass of the copolymer.

The PEBA copolymer contains i) a polyamide block which is polyamide-6 (PA-6) and ii) a polyether block which is polyethylene glycol (PEG), wherein the polyamide-6 block represents about 50% by mass to 35% by mass of the copolymer and the polyethylene glycol block represents about 50% by mass to 65% by mass of the copolymer.

The PEBA copolymer contains i) 10 to 20 polyamide blocks each of which is polyamide-6 (PA-6) and ii) 10 to 20 polyether blocks each of which is polyethylene glycol (PEG).

The PEBA copolymer contains i) a polyamide block which is polyamide-11 (PA-11) and ii) a polyether block which is polyethylene glycol (PEG). In an embodiment of the disclosure, the PEBA copolymer contains i) a polyamide block which is polyamide-12 (PA-12) and ii) a polyether block which is polytetrahydrofuran (PTHF).

The PEBA copolymer contains i) a polyamide block which is polyamide-12 (PA-12) and ii) a polyether block which is polytetrahydrofuran (PTHF), wherein the polyamide-12 block represents about 75% by mass to 10% by mass of the copolymer and the polytetrahydrofuran block represents about 25% by mass to 90% by mass of the copolymer.

The PEBA copolymer contains i) a polyamide block which is polyamide-12 (PA-12) and ii) a polyether block which is polytetrahydrofuran (PTHF), wherein the polyamide-12 block represents about 80% by mass to 60% by mass of the copolymer and the polytetrahydrofuran block represents about 20% by mass to 40% by weight of the copolymer.

The PEBA copolymer contains i) a polyamide block which is polyamide-12 (PA-12) and ii) a polyether block which is polytetrahydrofuran (PTHF), wherein the polyamide-12 block represents about 40% by mass to 60% by mass of the copolymer and the polytetrahydrofuran block represents about 60% by mass to 40% by mass of the copolymer.

The PEBA copolymer contains i) a polyamide block which is polyamide-12 (PA-12) and ii) a polyether block which is polytetrahydrofuran (PTHF), wherein the polyamide-12 block represents about 30% by mass to 10% by mass of the copolymer and the polytetrahydrofuran block represents about 70% by mass to 90% by mass of the copolymer.

The PEBA copolymer contains i) 10 to 20 polyamide blocks each of which is polyamide-12 (PA-12) and ii) 10 to 20 polyether blocks each of which is polytetrahydrofuran (PTHF).

The PEBA copolymer contains i) a polyamide block which is polyamide-12 (PA-12) and ii) a polyether block which is polytetrahydrofuran (PTHF), and has a number average molecular weight Mn of about 25000 to about 75000 g/mol.

The PEBA copolymer contains i) a polyamide block which is polyamide-12 (PA-12) and ii) a polyether block which is polytetrahydrofuran (PTHF), and has a number average molecular weight Mn of about 40000 to about 60000 g/mol. In an embodiment of the disclosure, the PEBA copolymer contains i) a polyamide block which is polyamide-12 (PA-12) and ii) a polyether block which is polytetrahydrofuran (PTHF), and has a number average molecular weight Mn of about 50000 g/mol.

The PEBA copolymer contains i) a polyamide block which is polyamide-6 (PA-6) and ii) a polyether block which is polytetrahydrofuran (PTHF).

The PEBA copolymer contains i) a polyamide block which is polyamide-11 (PA-11) and ii) a polyether block which is polytetrahydrofuran (PTHF).

The PEBA copolymer is a commercially available elastomer and is marketed under the trade name of PEBAX^{®}.

The PEBA copolymer is a commercially available elastomer selected from the group consisting of: PEBAX 2533 SA 01, PEBAX 2533 SA 01 MED, PEBAX 2533 SD 02, PEBAX 3533 SA 01, PEBAX 3533 SA 01 MED, PEBAX 3533 SP01, PEBAX 4011, PEBAX 4033 SA 01, PEBAX 4033 SA 01 MED, PEBAX 4033 SP01, PEBAX 4533 SA 01, PEBAX 4533 SA 01 MED, PEBAX 4533 SP01, PEBAX 5513 SA 01, PEBAX 5513 SP01, PEBAX 5533 SA 01, PEBAX 5533 SA 01 MED, PEBAX 5533 SN 70 BLACK, PEBAX 5533 SP01, PEBAX SA 01, PEBAX 6333 SA 01 MED, PEBAX SP01, PEBAX 6333 SP01, PEBAX 6333 SA 01, PEBAX, PEBAX 3533 SA 01, PEBAX 3533 SA 01 MED, PEBAX 3533 SP01, PEBAX 4011 SA 01, PEBAX 4033 SA 01 MED, PEBAX 4033 SP01, PEBAX 4033 SA 01 MED, PEBAX Clear 2533, PEBAX ES 2533 UV, PEBAX MH 2533, PEBAX MH2030, PEBAX MV 5513 SA 01, PEBAX MV 5513 SA 01 MED, PEBAX MV 5533 SP01, PEBAX MV 5533, PEBAX MV 5533 SP01, PEBAX RNEW^{®} 30R51 SA 01, PEBAX RNEW 35R53 SP01, PEBAX RNEW 70R53 SP01, PEBAX RNEW 55R53 SP01, PEBAX RNEW 63R53 SP01, PEBAX RNEW 70R53 SP01, PEBAX RNEW 70R53 SP01, PEBAX, PEBAX RNEW 72R53 SP01, PEBAX RNEW 80R53 SP 02, and a mixture of any of these.

The PEBA copolymer is a commercially available elastomer and is marketed under the trade name of VESTAMID^{®} or VESTAMID E.

The PEBA copolymer is a commercially available elastomer selected from the group consisting of VESTAMID D, VESTAMID DX, VESTAMID E, VESTAMID EX, VESTAMID Care, VESTAMID Care ML, VESTAMID Care ME, VESTAMID Care ME-B, VESTAMID L, VESTAMID LX, VESTAMID NRG, VESTAMID Terra, VESTAMID X, and a mixture of any of these. Preferred among these is Pebax MV 1072.

The PEBA copolymer may be used in the form of semisolid or viscous liquid, or in the form of powder, pellets, or granules.

Examples of the different component include an anti-agglomerating agent; an ultraviolet absorber; a flame retarder; a reinforcing material such as glass fiber or glass powder; a stabilizer such as mineral or flaky material; a lubricant such as silicone oil or molybdenum disulfide; a pigment such as titanium dioxide or red iron oxide; a conductive agent such as carbon black; an impact resistance improver such as rubber; an antioxidant such as a hindered phenol- or phosphorus-based antioxidant; a nucleating agent such as metal salt or acetal of sorbitol; and an antiblocking agent.

The processing aid of the disclosure is preferably substantially free from fluorine. The phrase "substantially free from fluorine" means that the processing aid has a fluorine content of 10 ppm or less (preferably 1 ppm or less, more preferably 0.1 ppm or less). The processing aid of the disclosure is particularly preferably free from fluorine (has a fluorine content of 0% by mass).

The water content of the processing aid of the disclosure is preferably 1.0% by mass or less, more preferably 0.5% by mass or less, still more preferably 0.2% by mass or less, most preferably 0.1% by mass or less. The lower limit may be, but is not limited to, 0% by mass.

The water content herein is determined by the following method.

The mass of the processing aid of the disclosure is weighed before and after heating at 130°C for 24 hours, and the water content is calculated by the following equation. Three samples are taken, and this calculation is performed for each sample and the values are averaged. 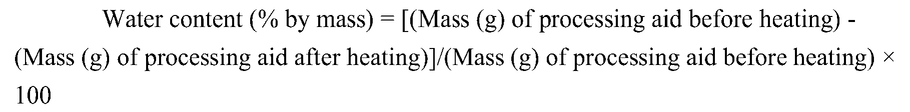 Water content (% by mass) = [(Mass (g) of processing aid before heating) - (Mass (g) of processing aid after heating)]/(Mass (g) of processing aid before heating) × 100

The processing aid having a water content within the above range can be obtained by any method. For example, a processing aid may be produced using materials with low water content under dry conditions, or a processing aid may be produced using normal materials under normal conditions and water may be removed therefrom by, for example, heat treatment.

The processing aid of the disclosure may be obtained by a mixing step of mixing the surfactant (A) and the resin (B) fed to a mixer or the like and an ejecting step of ejecting the mixture from the mixer, for example. The disclosure also relates to a method for producing the aforementioned processing aid including a mixing step and an ejecting step.

The process in the mixing step may be, but is not limited to, mixing (kneading) with a shear force or mixing without a shear force. From the viewpoint of the effect of improving the processibility, kneading is preferred, and melt-kneading is more preferred.

In the case of melt-kneading, the components may be melted in the mixing step or may be melted before the mixing step.

In the production method, the ejecting step may be followed by a molding step of molding the ejected matter using a molding machine, for example.

Examples of the process in the molding step include, but are not limited to, extrusion molding, injection molding, and blow molding. To effectively achieve the molding processibility, extrusion molding is preferred among these.

The extrusion molding is performed using an extruder. Examples of the extruder include a single-screw extruder, a twin-screw extruder, and a tandem extruder. The extruder commonly includes a cylinder, a screw housed in the cylinder, a die attached to the tip of the cylinder, and a hopper for feeding pellets to the cylinder.

The conditions relating to the molding are not limited and may be set as appropriate in accordance with, for example, the compositional ratio and amount of the composition as well as the shape and size of a desired molded article.

The processing aid of the disclosure is particularly useful as a processing aid for thermoplastic resin (particularly, polyolefin resin).

### <Masterbatch>

The masterbatch of the disclosure contains the processing aid of the disclosure and a thermoplastic resin (A).

The processing aid of the disclosure as it is may be added to a target such as a thermoplastic resin or may be added in the form of a masterbatch.

Examples of the thermoplastic resin (A) include a polyolefin polymer (e.g., polyethylene (PE), polypropylene (PP), and an ethylene-propylene copolymer), polystyrene (PS), acrylonitrile styrene (AS) resin (AS), acrylonitrile butadiene styrene (ABS) resin (ABS), methacrylic resin (PMMA), polymethyl pentene (PMP), polybutadiene resin (BDR), polybutene-1 (PB-1), polyvinyl alcohol (PVA), polyacrylonitrile (PAN), polystyrene methacrylate (MS), an ethylene-vinyl acetate copolymer (EVA), an ethylene-vinyl alcohol copolymer, and polyvinyl chloride (PVC). Each of these may be used alone or two or more of these may be used in combination. To achieve a better effect of improving the processibility, a polyolefin polymer (polyolefin resin) is preferred.

An example of the polyolefin polymer is a homopolymer (e.g., a homopolymer of a C2-C10 α-olefin, preferably a C2-C6 α-olefin). Specific examples of the homopolymer include homo-polyethylene and homo-polypropylene (hPP). In the case of homo-polyethylene, for example, this polymer can be produced by free-radical polymerization in a high-pressure process and is typically known as a highly branched ethylene homopolymer, which is often referred to as LDPE (low-density polyethylene), having a density of lower than 0.945 g/cm³, often 0.935 g/cm³ or lower, e.g., within a range from 0.900, 0.905, or 0.910 g/cm³ to 0.920, 0.925, 0.927, 0.930, 0.935, or 0.945 g/cm^{3.} Unless otherwise described herein, the densities of all polymers are determined in conformity with ASTM D1505. A sample is formed through the step C of ASTM D4703-10a and left under the conditions in ASTM D618-08 (23 ± 2°C and relative humidity 50 ± 10%) for 40 hours before testing.

In another example, an ethylene monomer can be polymerized in a phase of a known gas, slurry, and/or solution (using, e.g., a catalyst such as chromium catalyst or a single site catalyst such as Ziegler-Natta and/or metallocene catalyst), each of which is well known in the polymerization technique and is therefore not elaborated herein. In the case of producing a more highly linear ethylene homopolymer (e.g., using gas-phase or slurry-phase polymerization with any of the above catalysts), this is referred to as HDPE (high-density polyethylene), which typically has a density of 0.945 g/cm³ or higher, e.g., within a range from 0.945 to 0.970 g/cm³.

Examples of the polymer also include copolymers of two or more C2-C40 α-olefins, e.g., C2-C20 α-olefins, such as ethylene-α-olefin copolymers and propylene-α-olefin copolymers (e.g., a propylene-ethylene copolymer and a propylene-ethylene-diene terpolymer (also known as EPDM and PEDM)). Specific examples intended herein include an ethylene copolymer and one or more C3-C20 α-olefin comonomers such as a C4-C12 α-olefin comonomer (1-butene, 1-hexene, 1-octene, or a mixture of any two or more of these is preferred in a variety of embodiments). The ethylene copolymer (e.g., a copolymer of ethylene and one or more C3-C20 α-olefins) may contain an ethylene-derived unit in an amount of at least 90, 94, 95, or 96% by weight (e.g., within a range from a lower value of 80, 85, 90, 80, 85, 93, 93, 95, 96, or 97 wt% to a higher value of 94, 95, 95.5, 91, 92, 97, 94, 97.5, or 98 wt%; at least 96 wt% or 96.5 wt%), and may contain the unit in an amount within the range from any of the lower values to any of the higher values based on the total amount of the ethylene-derived unit and a comonomer-derived unit. For example, the ethylene copolymer may contain 94 or 95% by mass to 97 or 98% by mass of an ethylene-derived unit based on the total amount of the ethylene-derived unit and a comonomer-derived unit. The balance of the copolymer (based on the ethylene-derived unit and the comonomer-derived unit) consists of the comonomer-derived unit. For example, a comonomer unit (e.g., a unit derived from a C2-C20 α-olefin such as a unit derived from butene, hexene, and/or octene) may be present in an amount within a range from a lower value of 2, 2.5, 3, 3.5, 4, 4.5, 5, or 6% by mass to a higher value of 3, 4, 5, 6, 7, 8, 9, 10, 15, or 20% by mass, and the range thereof is from any of the above lower values to any intended value among the above higher values (provided that the higher value is greater than the lower value).

Some appropriate comonomers have already been known for ethylene-based, propylene-based, or other α-olefin-based copolymers; in various embodiments, other α-olefin comonomers are intended. For example, the α-olefin comonomer may be linear or branched, and two or more comonomers may be used as appropriate. Examples of appropriate comonomers include C3-C20 linear α-olefins (e.g., butene, hexene, and octene, as described above) and α-olefins having one or more C1-C3 alkyl branches or aryl groups. Examples include: propylene; 3-methyl-1-butene; 3,3-dimethyl-1-butene; 1-pentene; 1-pentene having one or more methyl, ethyl, or propyl substituents; 1-hexene having one or more methyl, ethyl, or propyl substituents; 1-heptene having one or more methyl, ethyl, or propyl substituents; 1-octene having one or more methyl, ethyl, or propyl substituents; 1-nonene having one or more methyl, ethyl, or propyl substituents; ethyl-, methyl- or dimethyl-substituted 1-decene; 1-dodecene; and styrene. The above list of comonomers shows mere examples and is not intended to set any limitation. In some embodiments, the comonomer includes propylene, 1-butene, 1-pentene, 4-methyl-1-pentene, 1-hexene, 1-octene, and styrene.

In a specific embodiment, the polymer may include an ethylene copolymer or may be an ethylene copolymer (according to the above description). The ethylene copolymer can be produced by gas, slurry, or solution phase polymerization. Some particularly preferred ethylene copolymers can be produced by gas or slurry phase polymerization. Specific examples include linear low-density polyethylene (LLDPE) and a copolymer of ethylene and one or more α-olefins, which are polymerized in the presence of one or more single site catalysts, e.g., one or more Ziegler-Natta catalysts, one or more metallocene catalysts, or combination of any of these. This LLDPE may have a density within a range from a lower concentration of 0.900, 0.905, 0.907, or 0.910 g/cm³ to a higher concentration of 0.920, 0.925, 0.930, 0.935, 0.940, or 0.945 g/cm^{3.} LLDPE is distinguishable from the aforementioned LDPE in some respects, many of which are well-known in the technical field, including the degree of branching (in many cases, there are few branches, if present) in the polymer produced. It should be noted that LLDPE has substantially a small number of long chain branches. In a specific embodiment, the polymer of the polymer composition is or includes a metallocene-catalyzed LLDPE (mLLDPE). In other embodiments, the polymer of the polymer composition is or includes a Ziegler-Natta-catalyzed LLDPE (or ZN-LLDPE).

In some embodiments, the density of the polymer falls within a range from 0.905 to 0.945 g/cm³, e.g., from a lower value of 0.905, 0.907, 0.908, 0.910, 0.911, 0.912, 0.913, 0.914, or 0.915 g/cm³ to a higher value of 0.916, 0.917, 0.918, 0.919, 0.920, 0.924, 0.926, 0.930, 0.935, 0.940, or 0.945 g/cm³, and the range thereof is from any of the above lower values to any of the above higher values intended herein (e.g., from 0.910 to 0.925 or 0.935 g/cm³, e.g., from 0.912 to 0.925 or from 0.915 to 0.918 g/cm³). In other embodiments, the polymer may be a higher-density one (e.g., HDPE) having a density within a range from 0.945 g/cm³ to 0.970 g/cm³.

The rheological characteristics of a polymer can have influence on the processing aid composition for forming a molded article. In common cases, a PPA composition is preferably used in a polymer having a melt index (MI or I2 is measured at 190°C and a 2.16 kg load in conformity with ASTM D1238) of 1.5 g/2.0 min or lower, preferably 2.5 g/3.0 min or lower, such as within a range from 0.1, 0.2, or 0.5 g/10 min to 1.0, 1.2, 5.0, 10, 2.5, 10, 4.0, or 5.0 g/10 min. In some embodiments, the polymer may commonly have a melt index ratio (MIR) (MIR herein is defined as the ratio of the high-load melt index (HLMI) (determined at 190°C and a 21.6 kg load per ASTM D1238) to the melt index or as HLMI/MI) within a range from 10, 12, or 15 to 19, 20, 21, 22, 25, 27, 30, 35, 40, 45, 50, 60, 65, 70, 75, 80, 85, 90, 95, or 100. If necessary, this polymer may have a MI of lower than 1.5 g/10 min, such as 1.0 g/10 min or lower (e.g., from 0.1, 0.2, or 0.5 g/10 min to 1.0; or any of 1.1, 1.2, 1.3, or 1.4, or lower than 1.5 g/10 min).

The LLDPE preferably includes at least one selected from the group consisting of a Ziegler-Natta-catalyzed LLDPE and a metallocene-catalyzed LLDPE. Particularly preferred is a metallocene-catalyzed LLDPE.

The thermoplastic resin (A) may have crystallinity or may have no crystallinity. The thermoplastic resin (A) having crystallinity has a melting point of preferably 80°C to 300°C, more preferably 100°C to 200°C. The thermoplastic resin (A) having no crystallinity preferably has a processing temperature substantially equal to that of a thermoplastic resin (A) whose melting point range is indicated by its crystallinity.

In the masterbatch of the disclosure, the mass ratio of the thermoplastic resin (A) to the processing aid (thermoplastic resin (A):processing aid) is preferably 99:1 to 1:99. The mass ratio is more preferably 97:3 to 50:50, still more preferably 95:5 to 60:40, particularly preferably 92:8 to 70:30.

The total amount of the thermoplastic resin (A) and the processing aid in the masterbatch of the disclosure is preferably 80% by mass or more, more preferably 90% by mass or more, still more preferably 95% by mass or more, particularly preferably 100% by mass.

The masterbatch of the disclosure has a melt flow rate (MFR) of preferably 0.1 g/10 min or higher, more preferably 0.5 g/10 min or higher, still more preferably 1 g/10 min or higher, further preferably 1.5 g/10 min or higher, while preferably 100 g/10 min or lower, more preferably 50 g/10 min or lower, still more preferably 30 g/10 min or lower, further preferably 20 g/10 min or lower, particularly preferably 10 g/10 min or lower. The masterbatch having a MFR within this range can lead to a better effect of improving the processibility.

The masterbatch of the disclosure may contain a component different from the thermoplastic resin (A) and the processing aid.

Examples of the component different from the thermoplastic resin (A) and the processing aid include an anti-agglomerating agent; an ultraviolet absorber; a flame retarder; a reinforcing material such as glass fiber or glass powder; a stabilizer such as mineral or flaky material; a lubricant such as silicone oil or molybdenum disulfide; a pigment such as titanium dioxide or red iron oxide; a conductive agent such as carbon black; an impact resistance improver such as rubber; an antioxidant such as a hindered phenol- or phosphorus-based antioxidant; a nucleating agent such as metal salt or acetal of sorbitol; and an antiblocking agent.

The masterbatch of the disclosure may be obtained by a mixing step of mixing the processing aid of the disclosure, which is prepared in advance, and the thermoplastic resin (A) fed to a mixer or the like and an ejecting step of ejecting the mixture from the mixer, or may be obtained by a mixing step of mixing the thermoplastic resin (A), the degradation inhibitor, and the polyester resin fed to a mixer or the like and an ejecting step of ejecting the mixture from the mixer, for example. The disclosure also relates to a method for producing the aforementioned masterbatch including a mixing step and an ejecting step.

In the method for producing a masterbatch of the disclosure, the ejecting step may be followed by a molding step of molding the ejected matter using a molding machine, for example.

The mixing step, the ejecting step, and the molding step in the method for producing a masterbatch of the disclosure are the same as those described for the method for producing a processing aid of the disclosure.

The masterbatch of the disclosure is particularly useful as a masterbatch for improving the processibility of thermoplastic resin (particularly, polyolefin resin).

### <Thermoplastic resin composition>

The thermoplastic resin composition of the disclosure contains at least one of the processing aid of the disclosure or the masterbatch of the disclosure, and a thermoplastic resin (B). This leads to good processibility. In particular, thickness unevenness upon extrusion molding can be improved.

The thermoplastic resin (B) used may be the same as the thermoplastic resin (A), and a preferred form thereof is also the same as that of the thermoplastic resin (A).

The thermoplastic resin composition of the disclosure contains at least one of the processing aid of the disclosure or the masterbatch of the disclosure, and preferably contains the masterbatch of the disclosure to achieve better processibility.

In the case where the thermoplastic resin composition of the disclosure contains the masterbatch of the disclosure, the thermoplastic resin (A) and the thermoplastic resin (B) may be the same as or different from each other.

The amount of the processing aid in the thermoplastic resin composition of the disclosure is preferably 0.001% by mass or more, more preferably 0.01% by mass or more, still more preferably 0.05% by mass or more, further preferably 0.08% by mass or more, particularly preferably 0.1% by mass or more, while preferably 5% by mass or less, more preferably 3% by mass or less, still more preferably 2% by mass or less, particularly preferably 1% by mass or less.

The thermoplastic resin composition of the disclosure may contain a component different from the processing aid, the masterbatch, and the thermoplastic resin (B).

Examples of the component different from the processing aid, the masterbatch, and the thermoplastic resin (B) include an anti-agglomerating agent; an ultraviolet absorber; a flame retarder; a reinforcing material such as glass fiber or glass powder; a stabilizer such as mineral or flaky material; a lubricant such as silicone oil or molybdenum disulfide; a pigment such as titanium dioxide or red iron oxide; a conductive agent such as carbon black; an impact resistance improver such as rubber; an antioxidant such as a hindered phenol- or phosphorus-based antioxidant; a nucleating agent such as metal salt or acetal of sorbitol; and an antiblocking agent.

The thermoplastic resin composition of the disclosure may be obtained by a mixing step of mixing the masterbatch of the disclosure, which is prepared in advance, and the thermoplastic resin (B) fed to a mixer or the like and an ejecting step of ejecting the mixture from the mixer, or may be obtained by a mixing step of mixing the thermoplastic resin (B), the degradation inhibitor, the polyester resin, and optionally the thermoplastic resin (A) fed to a mixer or the like and an ejecting step of ejecting the mixture from the mixer, for example. The disclosure also relates to a method for producing the aforementioned thermoplastic resin composition including a mixing step and an ejecting step.

In the method for producing a thermoplastic resin composition of the disclosure, the ejecting step may be followed by a molding step of molding the ejected matter using a molding machine, for example.

The mixing step, the ejecting step, and the molding step in the method for producing a thermoplastic resin composition of the disclosure are the same as those described for the method for producing a processing aid of the disclosure.

### <Molded article>

The molded article of the disclosure is obtainable from the thermoplastic resin composition of the disclosure and may be obtained by, for example, a molding step of molding the thermoplastic resin composition of the disclosure.

The disclosure also relates to a method for producing a molded article including a molding step.

The thermoplastic resin composition of the disclosure is suitable for a molded article in the form of a tube, a film, or a sheet, and may be applicable to a molded article in a different form.

The molding step is the same as that described for the method for producing a processing aid of the disclosure.

In the molding step, the molding temperature (extrusion temperature) during molding is commonly equal to or higher than the melting point of the thermoplastic resin (B) and lower than the decomposition temperature of the degradation inhibitor and lower than the decomposition temperature of the polyester resin. To allow the processing aid to significantly exert its effects, the molding temperature preferably falls within a range of 160°C or higher and 270°C or lower.

The molding temperature may also be referred to the extrusion temperature in the case of extrusion molding.

The molded article of the disclosure preferably has a thickness unevenness calculated by the following equation of 15% or less, more preferably 14% or less, particularly preferably 11% or less, most preferably 8% or less. The lower limit may be, but is not limited to, 0%. 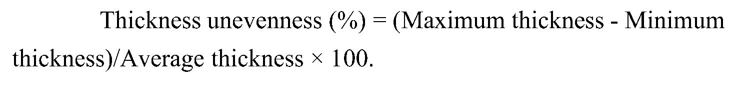 Thickness unevenness (%) = (Maximum thickness - Minimum thickness)/Average thickness × 100.

The maximum thickness, the minimum thickness, and the average thickness in the equation are measured by the methods in EXAMPLES.

Examples of applications of the molded article of the disclosure include, but are not limited to, bags, coating materials, dishware such as drink containers, electric wires, cables, pipes, fibers, bottles, gasoline tanks, and other industrial molded articles.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The following materials were used in the examples and the comparative examples.

### (Degradation inhibitor)

Phenol-based: pentaerythritol tetrakis[3-(3,5-di-tert-butyl-4-hydroxyphenyl)propionate]
Phosphate-based: tris(2,4-di-tert-butylphenyl)phosphite

### (Polyester resin)

PLA: polylactic acid (MFR: 3 g/10 min, melting point: 153°C)
PBS: polybutylene succinate (MFR: 22 g/10 min, melting point: 114°C)

### (Additives)

EVOH: ethylene-vinyl alcohol copolymer (ethylene content: 38 mol%, MFR: 1.6 g/10 min, melting point: 172°C)

### (Thermoplastic resin (B) (matrix resin))

LLDPE-1: metallocene-catalyzed linear low-density polyethylene (MFR: 0.8 g/10 min, melting point: 123°C, d = 0.925, MIR = 28.1)

### (Thermoplastic resin (A) (carrier resin))

LLDPE-2: metallocene-catalyzed linear low-density polyethylene (MFR: 2.0 g/10 min, melting point: 123°C, d = 0.925, MIR = 23.6)
LLDPE-3: Ziegler-Natta-catalyzed linear low-density polyethylene (MFR: 2.0 g/10 min, melting point: 123°C, d = 0.918, MIR = 23.2)

### Comparative Example 1, Examples 1 to 10, Example 13, and Comparative Example 2

First, the matrix resin, the degradation inhibitor, the additive, and the polyester resin were melt-kneaded in the proportions shown in Table 1 or 3 using a twin-screw extruder (TEX25αIII available from Japan Steel Works, Ltd.) under the conditions including a cylinder temperature of 180°C to 200°C, a die temperature of 200°C, and a screw rotational speed of 400 rpm, whereby a compound was obtained. Next, the processibility of the resulting compound was evaluated as in <Extrusion evaluation> described below. The results are shown in Tables 1 and 3. The materials of the degradation inhibitor, the additive, and the polyester resin used each contained no fluorine and the processing aid therefore had a fluorine content of 0% by mass.

### Examples 11 and 12

First, the carrier resin, the degradation inhibitor, and the polyester resin were melt-kneaded in the proportions shown in Table 2 using a twin-screw extruder (TEXαIII available from Japan Steel Works, Ltd.) under the conditions including a cylinder temperature of 180°C to 200°C, a die temperature of 200°C, and a screw rotational speed of 400 rpm, whereby a masterbatch (MB) was obtained. The concentration of the degradation inhibitor in the masterbatch was 5% by mass and the concentration of the polyester resin in the masterbatch was 20% by mass. The masterbatch obtained was then dry blended with the matrix resin in the proportion shown in Table 2, and the processibility in this case was evaluated as in <Extrusion evaluation> described below. The results are shown in Table 2. The materials of the degradation inhibitor and the polyester resin used each contained no fluorine and the processing aid therefore had a fluorine content of 0% by mass.

### <Extrusion evaluation>

Each material was extruded for 70 minutes through a monolayer inflation molding machine (inflation die diameter: 25 mm, die gap: 0.8 mm) under the conditions including a cylinder temperature of 170°C, a die temperature of 200°C, and a shear rate of 90/sec, which was evaluated for the following items. Before each test operation, linear low-density polyethylene containing 15% by mass of silica was fed into a hopper to perform purging for about 60 minutes. The same matrix resin as one used for the test was then fed to perform purging for about 60 minutes. After the pressure surely returned to the initial pressure, a next experiment was performed. If the pressure did not return to the initial value, the above purging process was repeated until the pressure returned to the initial value and a next experiment was then performed.

### (Melt fracture (MF) disappearance time)

The matrix resin alone was extruded until the pressure stabilized while melt fracture occurred on the entire surface. The point of time at which the screw appeared was defined as zero, and the matrix resin was then extruded for 70 minutes. In the examples where the processing aid or the masterbatch was used, they were fed to the hopper at the zero point. The appearance of a strand at an early stage of extrusion and the appearance of a strand at completion of extrusion were checked by visual and tactile inspection. The period of time was measured from the zero point of time described above to the point when MF disappeared. The shorter the period of time is, the better the MF disappearance time is.

### (Pressure stability)

After five minutes from the MF disappearance, the extrusion pressure was measured at 1-minute intervals for 20 minutes and the standard deviation thereof was calculated. The closer the value is to 0, the better the pressure stability is.

### (Film thickness)

At the 50-minute, 60-minute, and 70-minute points from the start of extrusion, the film was collected for three minutes. One measurement site was set in the TD direction of each collected film, and the film thickness was measured at 25 points (75 points in total) in the MD direction at 25°C. The average, the maximum, and the minimum were then calculated. The thickness unevenness was then calculated by the following equation. 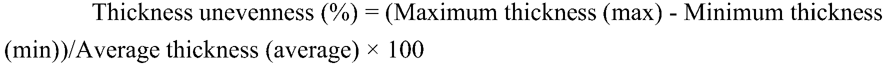 Thickness unevenness (%) = (Maximum thickness (max) - Minimum thickness (min))/Average thickness (average) × 100

**[Table 1]**

| | Thermoplastic resin (B) | Polyester resin | Additive | Degradation inhibitor (Ratio of mixed inhibitors is expressed as mass ratio) | Addition concentration (ppm) | | | Extrusion evaluation | | | | | |
|---|---|---|---|---|---|---|---|---|---|---|---|---|---|
| | | | | | (Polyester resin (Thermoplastic resin B + Polyester resin + Additive + Degradation inhibitor) | Additive/( Thermoplastic resin B+ Polyester resin + Additive + Degradation inhibitor) | Degradation inhibitor/( Thermoplastic resin B + Polyester resin + Additive + Degradationinhibitor) | MF disappearance time | Pressure stability | Film thickness | | | |
| | | | | | | | | | | Average value (µm) | Maximum value (µm) | Minimum value (µm) | Thickness unevenness (%) |
| Example 1 | LLDPE-1 | PLA | - | Phenol type | 2000 | - | 1000 | 40 | 0.538 | 68 | 73 | 64 | 13 |
| Example 2 | LLDPE-1 | PLA | - | Phosphate type | 2000 | - | 1000 | 40 | 0.936 | 67 | 74 | 64 | 15 |
| Example 3 | LLDPE-1 | PLA | - | Phenol type:phosphate type = 50:50 | 2000 | - | 1000 | 40 | 0.454 | 68 | 69 | 65 | 6 |
| Example 4 | LLDPE-1 | PLA | - | Phenol type:phosphate type = 50:50 | 2000 | - | 500 | 40 | 0.722 | 65 | 73 | 64 | 14 |
| Example 5 | LLDPE-1 | PLA | - | Phenol type:phosphate type = 50:50 | 2000 | - | 700 | 40 | 0.519 | 65 | 70 | 63 | 11 |
| Example 6 | LLDPE-1 | PLA | - | Phenol type:phosphate type = 50:50 | 2000 | - | 1500 | 40 | 0.453 | 67 | 68 | 64 | 6 |
| Example 7 | LLDPE-1 | PLA | - | Phenol type:phosphate type = 30:70 | 2000 | - | 1000 | 40 | 0.461 | 67 | 69 | 65 | 6 |
| Example 8 | LLDPE-1 | PLA | - | Phenol type:phosphate type = 70:30 | 2000 | - | 1000 | 40 | 0.499 | 68 | 72 | 65 | 10 |
| Example 9 | LLDPE-1 | PLA | EVOH | Phenol type:phosphate type = 50:50 | 1600 | 400 | 1000 | 20 | 0.451 | 70 | 73 | 69 | 6 |
| Example 10 | LLDPE-1 | PLA | EVOH | Phenol type:phosphate type = 50:50 | 1800 | 200 | 1000 | 20 | 0.455 | 69 | 71 | 67 | 6 |
| Comparative Example 1 | LLDPE-1 | PLA | - | - | 2000 | - | - | 40 | 3.224 | 65 | 73 | 60 | 20 |

**[Table 2]**

| | Thermoplastic resin (B) | Composition of MB | | | Addition concentration (ppm) | | | Extrusion evaluation | | | | | |
|---|---|---|---|---|---|---|---|---|---|---|---|---|---|
| | | Thermoplastic resin (A) | Polyester resin | Degradation inhibitor | MB/(Thermoplastic resin B + MB) | Polyester resin/(Thermoplastic resin B + Thermoplastic resin A + Polyester resin + Degradation inhibitor) | Degradation inhibitor/(Thermoplastic resin B + Thermoplastic resin A + Polyester resin + Degradation inhibitor) | MF disappearance time | Pressure stability | Film thickness | | | |
| | | | | | | | | | | Average value (µm) | Maximum value (µm) | Minimum value (µm) | Thickness unevenness (%) |
| Example 11 | LLDPE-1 | LLDPE-2 | PLA | Phenol type:Phosphate type = 50:50 | 10000 | 2000 | 1000 | 40 | 0.481 | 67 | 70 | 65 | 7 |
| Example 12 | LLDPE-1 | LLDPE-3 | PLA | Phenol type:Phosphate type = 50:50 | 10000 | 2000 | 1000 | 40 | 0.484 | 66 | 69 | 64 | 8 |

**[Table 3]**

| | **Thermoplastic** resin (B) | Polyester resin | Additive | Degradation inhibitor (Ratio of mixed inhibitors is expressed as mass ratio) | Addition concentration (ppm) | | | Extrusion evaluation | | | | | |
|---|---|---|---|---|---|---|---|---|---|---|---|---|---|
| | | | | | (Polyester resin/( Thermoplastic resin B + Polyester resin + Additive + Degradation | Additive/(Th ermoplastic resin B + Polyester resin + Additive + Degradation inhibitor) | Degradation inhibitor/(Thermoplastic resin B + Polyester resin + Additive + Degradation inhibitor) | MF disappearance time | Pressure stability | Film thickness | | | |
| | | | | | | | | | | Average value (µm) | Maximum value (µm) | Minimum value (µm) | Thickness unevenness (%) |
| Example 13 | LLDPE-1 | PBS | - | Phenol type:phosphate type = 50:50 | 2000 | - | 1000 | 50 | 0.522 | 67 | 70 | 64 | 9 |
| Example 3 | LLDPE-1 | PLA | - | Phenol type:phosphate type = 50:50 | 2000 | - | 1000 | 40 | 0.454 | 68 | 69 | 65 | 6 |
| Com parative Example 1 | LLDPE-1 | PLA | - | - | 2000 | - | - | 40 | 3.224 | 65 | 73 | 60 | 20 |
| Com parative Example 2 | LLDPE-1 | PBS | - | - | 2000 | - | - | 50 | 3.301 | 66 | 74 | 60 | 21 |

## Claims

1. A processing aid comprising:
a degradation inhibitor; and
a polyester resin.

2. The processing aid according to claim 1,
wherein the processing aid is substantially free from fluorine.

3. The processing aid according to claim 1 or 2,
wherein the degradation inhibitor contains at least one skeleton selected from the group consisting of a phenol skeleton and a phosphate skeleton.

4. The processing aid according to any one of claims 1 to 3,
wherein the degradation inhibitor includes at least one selected from the group consisting of pentaerythritol tetrakis[3-(3,5-di-tert-butyl-4-hydroxyphenyl)propionate] and tris(2,4-di-tert-butylphenyl) phosphite.

5. The processing aid according to any one of claims 1 to 4,
wherein the polyester resin has a melting point of 190°C or lower.

6. The processing aid according to any one of claims 1 to 5,
wherein the polyester resin includes a biodegradable resin.

7. The processing aid according to any one of claims 1 to 6,
wherein the polyester resin includes polylactic acid.

8. The processing aid according to any one of claims 1 to 7, further comprising an ethylene-vinyl alcohol copolymer.

9. A masterbatch comprising:
the processing aid according to any one of claims 1 to 8; and
a thermoplastic resin (A).

10. The masterbatch according to claim 9,
wherein the thermoplastic resin (A) includes a polyolefin resin.

11. The masterbatch according to claim 9 or 10,
wherein the thermoplastic resin (A) includes at least one selected from the group consisting of metallocene-catalyzed linear low-density polyethylene and Ziegler-Natta-catalyzed linear low-density polyethylene.

12. The masterbatch according to any one of claims 9 to 11,
wherein a mass ratio of the thermoplastic resin (A) to the processing aid (thermoplastic resin (A):processing aid) is 92:8 to 70:30.

13. A thermoplastic resin composition comprising:
at least one of the processing aid according to any one of claims 1 to 8 or the masterbatch according to any one of claims 9 to 12; and
a thermoplastic resin (B).

14. The thermoplastic resin composition according to claim 13,
wherein the thermoplastic resin (B) includes a polyolefin resin.

15. The thermoplastic resin composition according to claim 13 or 14,
wherein the thermoplastic resin (B) includes metallocene-catalyzed linear low-density polyethylene.

16. The thermoplastic resin composition according to any one of claims 13 to 15,
wherein the processing aid is contained in an amount of 0.1 to 1% by mass.

17. A molded article comprising the thermoplastic resin composition according to any one of claims 13 to 16.

18. The molded article according to claim 17,
wherein the molded article is in a form of a tube, a film, or a sheet.

19. The molded article according to claim 17 or 18,
wherein the molded article has a thickness unevenness of 15% or lower, the thickness unevenness being calculated by the following equation: 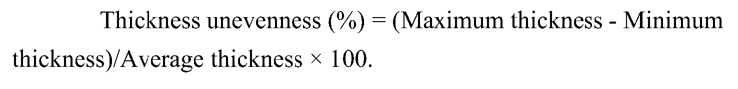 Thickness unevenness (%) = (Maximum thickness - Minimum thickness)/Average thickness × 100.

20. A method for producing the processing aid according to any one of claims 1 to 8, comprising a mixing step and an ejecting step.

21. A method for producing the masterbatch according to any one of claims 9 to 12, comprising a mixing step and an ejecting step.

22. A method for producing the thermoplastic resin composition according to any one of claims 13 to 16, comprising a mixing step and an ejecting step.

23. A method for producing the molded article according to any one of claims 17 to 19, comprising a molding step.
